# EUROPEAN PATENT SPECIFICATION

(11) **EP 4 201 200 B1**
(45) Date of publication and mention of the grant of the patent: **21.08.2024**
(21) Application number: 21306911.5
(22) Date of filing: 23.12.2021
(51) Int. Cl.: A01K 11/00

(54) **EAR-TAG APPLICATOR**
OHRMARKEN-APPLIKATOR
APPLICATEUR D'ÉTIQUETTES D'OREILLE

(43) Date of publication of application: 28.06.2023
(73) Proprietor: Allflex Australia Pty Ltd, Capalaba, QLD 4157 (AU); Allflex Europe SAS, 35000 Vitré (FR)
(72) Inventor: TEYCHENE, Bruno Philippe Jean, 81000 Albi (FR); LE MAY, Quentin Serge, 81000 Albi (FR); WILKINSON, Benjamin Thomas John, Capalaba, Queesland, 4157 (AU)
(74) Representative: Intervet International B.V.

(56) References cited:
- WO-A1-01/72117
- WO-A1-2021/000016
- FR-A- 1 427 470
- FR-A1- 2 831 389
- US-A1- 2013 211 416
- US-A1- 2021 345 583

## Description

### FIELD

This relates to a device for an animal, such as animal tag applicators, animal tissue sample extractors, and animal puncture devices, including but not limited to where such devices are hand-held devices. A single device can perform a combination of any number of the above functions.

### BACKGROUND

When rearing livestock (such as sheep, cattle, goats, or deer), a number of devices are used. These devices include animal tag applicators, animal tissue sample extractors, animal puncture devices, and devices which perform multiple of these functions simultaneously or sequentially.

Animal tag applicators are used to apply an animal tag to an animal. A tag may be attached to each animal identification of the animal. For example, this may be an ear tag which is attached through the cartilage of an animal's ear. In an embodiment, such tags may be applied using an applicator.

One style of tag is a two-piece tag which has a male portion configured to engage with a female portion. In an embodiment, an applicator is charged with a female and male portion of the tag. After a user positions the charged applicator at an appropriate part of the animal (which may be an appropriate location of the animal's ear), the user triggers the applicator. This causes the male portion to pierce the animal's ear and join to the female portion. The tag will then permanently attached to the animal.

Another style of tag is a one-piece tag which has a barbed end configured to be retained in an animal's ear. In an embodiment, an applicator is charged with the one-piece tag. After a user positions the charged applicator at an appropriate location of the animal's ear, the user triggers the applicator. This causes the barbed end to pierce the animal's ear, with the barb retaining the tag in the ear.

*Animal tissue sample extractors may be used to extract a portion of flesh from the animal. In an embodiment, the device has a piercing member, which may be referred* to *as the tissue sampler, at one side of the jaws and a container at the other. After a user positions the applicator at an appropriate location of the animal's ear, for example, the user triggers the applicator. This causes the piercing member to cut out a portion of the animal's ear which is then retained in the container. In this way, the tissue sample is stored and may be later used for testing the health or other characteristics of the animal.*

*Animal puncture devices may also be used to form a hole in a part of the animal. This can be to cause opening in the animal's ear or other body part to allow a tag or other device to be inserted. In an embodiment, the device has a plunging member at one end of the jaw. After a user positions the device at an appropriate part of the animal (such as over the cartilage of the animal's ear), the user triggers the device. This causes the plunging member to cut out a hole in the animal's body part.*

*In some cases, the devices may be hand-held devices. These have the form of handles which, when pressed together, actuate the device and cause two parts of the device to close. In an embodiment, the handles are spring biased so as to return to a resting position.*

*Hand-held devices for applying a tag to animals and extracting animal tissue are also known from patent documents published under numerals* FR2831389*,* US20130211416*,* WO0172117 *and* US2021345583*, but do not solve the above identified drawbacks.*

### SUMMARY

The invention is set out in the appended claims. *In a first embodiment,* a first way to carry out the invention is described, in which *there is provided a hand-held device for applying a tag to animals and extracting animal tissue, comprising: a first handle; a second handle; a first jaw portion configured to engage a first portion of an animal tag and an animal tissue sampler for extracting animal tissue; and a second jaw portion configured to engage a second portion of the animal tag and a container for storing animal tissue,* and a spring, *wherein displacing the first handle in a closing direction* to *an engaging position causes the first portion of the animal tag to engage the second portion of the animal tag;* wherein displacing the first handle in a closing direction to an engaging position causes the first portion of the animal tag to engage the second portion of the animal tag, *and wherein displacing the first handle in the closing* direction to a disposing position causes the animal tissue sampler to be disposed within the container. The spring in the deformed state is configured, when released, to dispose the animal tissue sampler within the container.

In a second embodiment, there is provided the hand-held device of the first embodiment, further comprising a housing and a first inner for retaining the animal tissue sampler, wherein displacing the first handle in the closing direction to the loading position displaces the spring into a deformed state via relative movement between the first inner and the housing.

In a third embodiment, there is provided the hand-held device of the second embodiment, further comprising an arm comprising a beak configured to abut the first inner.

In a fourth embodiment, there is provided the hand-held device of the third embodiment, wherein the beak of the arm abuts the first inner at an inclined contact surface.

In a fifth embodiment, there is provided the hand-held device of any one of second to fourth embodiments, further comprising a second inner and a coupling, wherein the coupling couples the first inner and the second inner in a first configuration, and wherein the coupling allows movement of the first inner relative to the second inner in a second configuration.

In a sixth embodiment, there is provided the hand-held device of the fifth embodiment, wherein the coupling comprises one or more rollers, wherein the one or more rollers are partially retained within a groove of the first inner in the first configuration, and wherein the one or more rollers are not retained within the groove in the second configuration.

In a seventh embodiment, a second way to carry out the invention is described, in which there is provided a hand-held device for applying a tag to animals and extracting animal tissue, comprising: a first handle; a second handle; a first jaw portion configured to engage a first portion of an animal tag and an animal tissue sampler; a second jaw portion configured to engage a second portion of the animal tag and a container for storing animal tissue; and a spring; wherein displacing the first handle in an opening direction to a loading position places the spring into a deformed state; and wherein displacing the first handle in a closing direction to an engaging position causes the first portion of the animal tag to engage the second portion of the animal tag. The spring in the deformed state is configured, when released, to dispose the animal tissue sampler within the container.

In an eighth embodiment, there is provided the hand-held device of the seventh embodiment, further comprising a first linkage, a second linkage, and a pawl, wherein the first linkage is connected to the first handle, wherein the second linkage is connected to the first linkage, wherein the pawl is connected to the second linkage, and wherein the first linkage, the second linkage, and the pawl are configured to pivot relative to one another.

In a ninth embodiment, there is provided the hand-held device of the eighth embodiment, further comprising an obstacle configured to engage the pawl.

In a tenth embodiment, there is provided the hand-held device eighth or ninth embodiment, further comprising an inner, wherein displacing the first handle in the opening direction causes the pawl to engage the inner.

In an eleventh embodiment, there is provided the hand-held device of the tenth embodiment, further comprising a second inner and a coupling, wherein the coupling couples the first inner and the second inner in a first configuration, and wherein the coupling allows movement of the first inner relative to the second inner in a second configuration.

In a twelfth embodiment, there is provided the hand-held device of the eleventh embodiment, wherein the coupling comprises one or more rollers, wherein the one or more rollers are partially retained within a groove of the first inner in the first configuration, and wherein the one or more rollers are not retained within the groove in the second configuration.

### BRIEF DESCRIPTION

The description is framed by way of example with reference to the drawings which show certain embodiments. However, these drawings are provided for illustration only, and do not exhaustively set out all embodiments.
Figure 1 shows a front isometric view of an example Squeeze device.
Figure 2 shows a side view of the Squeeze device.
Figure 3 shows a back isometric view of the Squeeze device.
Figure 4 shows a partially disassembled rear view of the Squeeze device.
Figure 5 shows a partially disassembled front view of the Squeeze device.
Figure 6 shows a sectional view of the Squeeze device as taken through the midline of the Squeeze device.
Figure 7 shows a further disassembled front view of the Squeeze device.
Figure 8 shows a section view of an example Pull device as taken through the midline of the Pull device.
Figure 9a shows a device with clamps in a clamping position.
Figure 9b shows the device of Figure 9a with clamps in a release position.
Figure 10a shows the Squeeze device in a first state of its actuation cycle.
Figure 10b shows the Squeeze device in a second state of its actuation cycle.
Figure 10c shows the Squeeze device in a third state of its actuation cycle.
Figure 11a shows the Pull device in a first state of its actuation cycle.
Figure 11b shows the Pull device in a second state of its actuation cycle.
Figure 11c shows the Pull device in a third state of its actuation cycle.
Figure 11d shows the Pull device in a fourth state of its actuation cycle.

### DETAILED DESCRIPTION

The present description relates to devices for animals, such as animal tag applicators, animal tissue sample extractors, and animal puncture devices, including but not limited to where such devices are hand-held devices. A single device can perform a combination of any number of the above functions.

The description and the drawings show two example devices (the Squeeze device and the Pull device) as an illustration of how the principles of the invention can be applied to such devices. However, the invention may be embodied in any other such devices that are compatible with the principles of operation.

### Squeeze Device

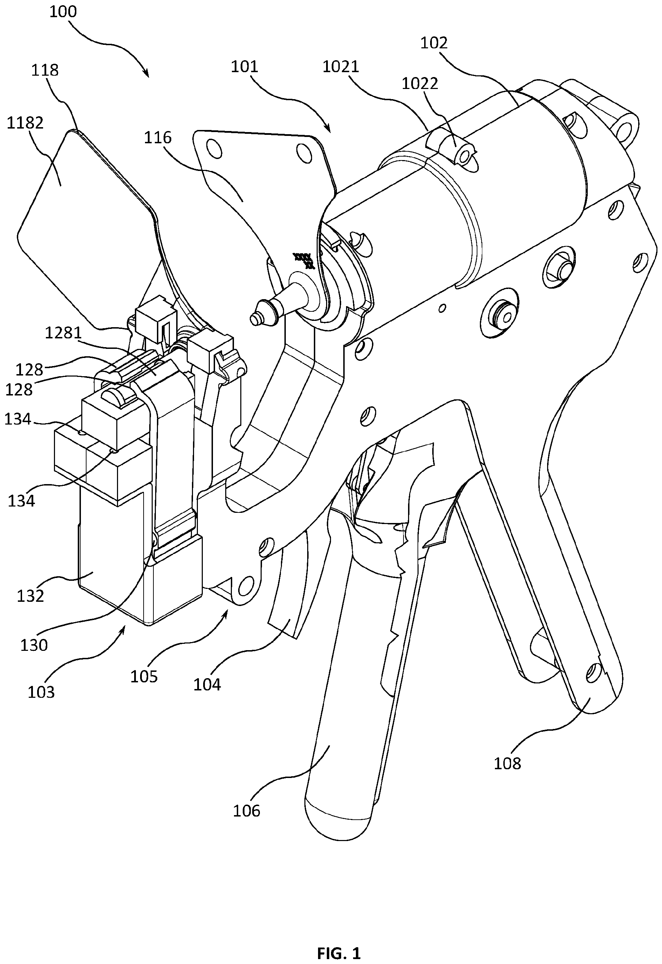

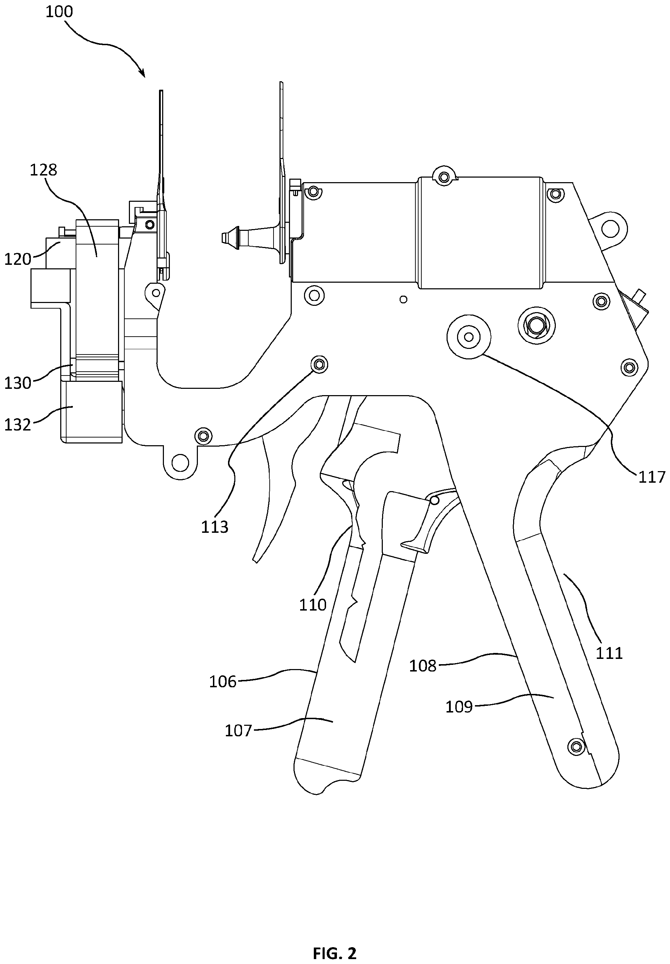

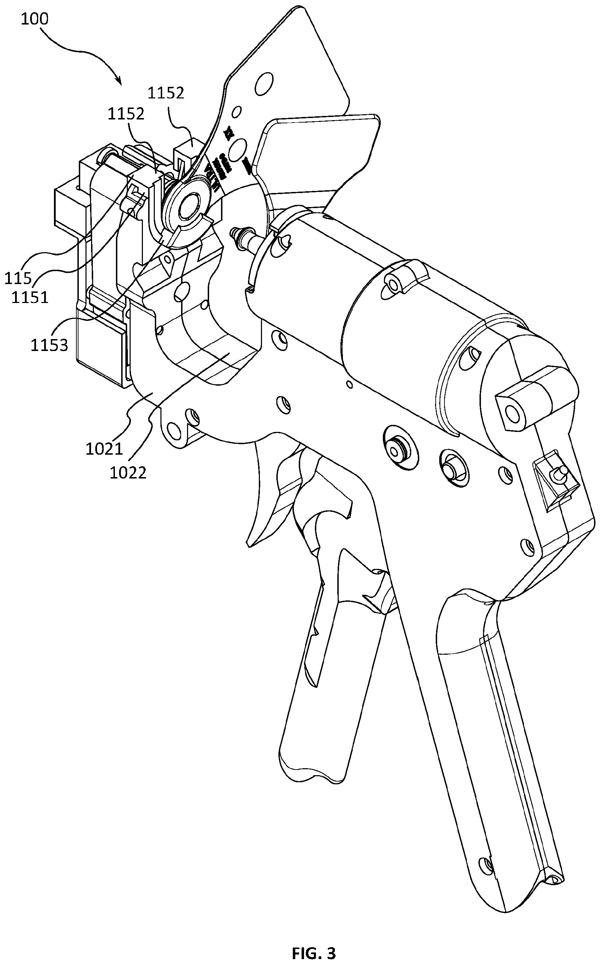

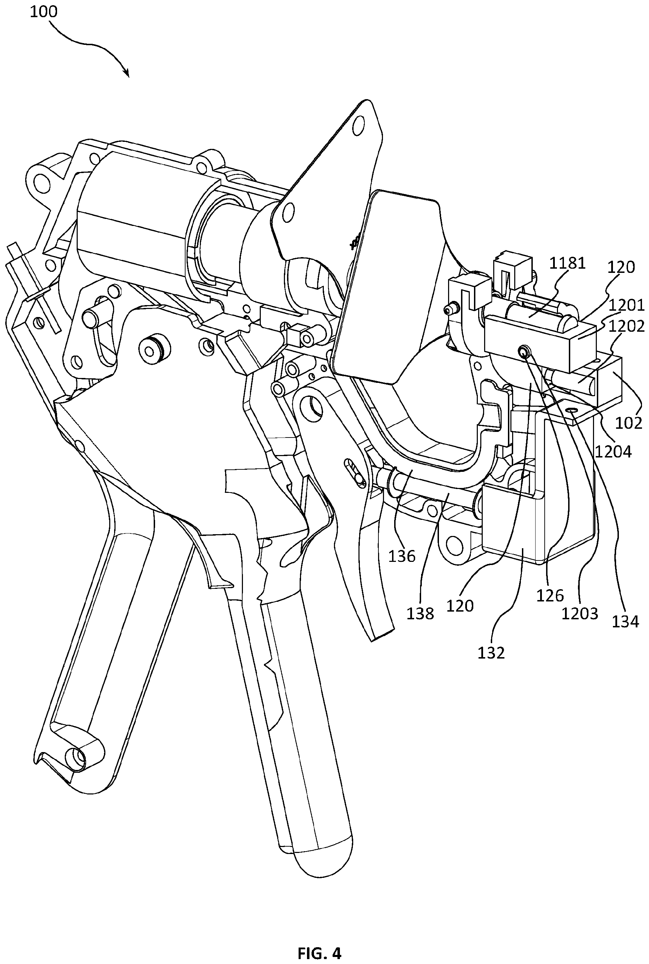

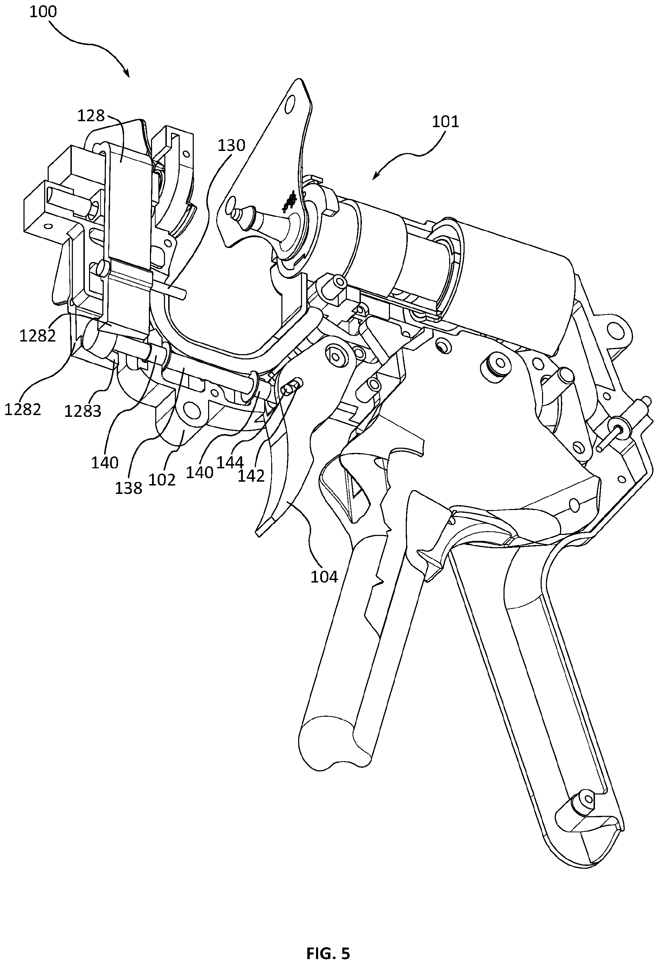

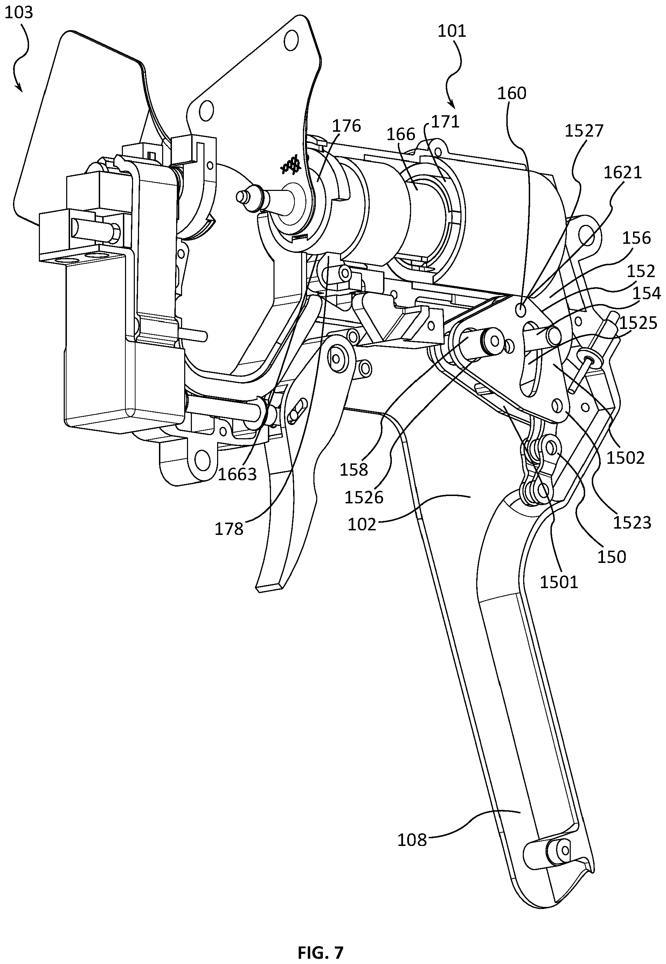

Figures 1 to 7 show an example Squeeze device 100 which may be used to perform the animal-related functions described above.

The Squeeze device 100 may comprise a male portion 101, a female portion 103, a neck portion 105 connecting the male portion 101 and the female portion 103, a housing 102, an activator 104, and a first handle 106. These are the major components visible when a Squeeze device 100 is in its assembled form. In use, first handle 106 is squeezed by a user, which causes handle 106 to be displaced in a closing direction towards handle 108. Consequently, parts of an internal assembly 161 of male portion 101 are moved towards female portion 103. This may cause a tag to be applied to an animal and/or some animal tissue to be extracted and disposed in a container.

Housing 102 comprises two mating members 1021 and 1022 which, when assembled, form a complete housing 102. Housing 102 comprises a male portion corresponding to the male portion 101, a female portion corresponding to the female portion 103, a neck portion corresponding to the neck portion 105. In addition, housing 102 comprises a second handle 108.

In general, the profile of housing 102 substantially complements the internal assembly of the Squeeze device 100.

Housing 102 may be formed in a single piece, for example by being cast from steel (or another metal) which could then be sand blasted and/or powder coated, by being moulded from plastic, or otherwise formed integrally from another material providing sufficient durability.

Activator 104 and handle 106 are moveable members and trigger various actuations of the Squeeze device 100 in response to user operation. They are configured to rotate relative to housing 102 about respective pivots 113 and 117. In contrast, handle 108 being integral to housing 102 would typically remain stationary in a user's hand.

Activator 104, handle 106, and handle 108 may each comprise a grip. The grip may be configured such that a user can easily and comfortably apply a force with their hands (or specifically their fingers) to the grip. The grip may have a curved profile free of any sharp or otherwise discontinuous portions which might injure a user's hand in use. By providing such a curved profile, there are no portions which concentrate pressure on a part of a user's hand. For example, any raised domes or depressed notches are avoided on the contact surfaces of the grip. This helps avoid discomfort, blisters, or injuries which might otherwise arise through repeated use. A recess may be formed in a non-contact portion of a handle. The recess may be configured to retain spare parts, for example through friction fit.

In some embodiments, one or more of the activator 104, handle 106, and handle 108 are configured to reduce the vibrations felt by a user during use and/or to reduce noise produced during use. For example, one or more of the activator 104, handle 106, and handle 108 may be formed of a material and/or may have components which tends to reduce vibration and/or noise.

Grip 107 of handle 106 is delimited at a shoulder 110. Shoulder 110 may be substantially wider than grip 107 so as to provide an abutment for a user's hand, which might allow the user to more stably grasp handle 106.

Grip 109 of handle 108 is delimited at a shoulder 111. Shoulder 111 may be substantially wider than grip 109 so as to provide an abutment for a user's hand, which might allow the user to more stably grasp handle 108.

In the embodiment shown, activator 104 is substantially smaller than handles 106 and 108. This may be preferable as activator 104 only needs to be big enough to accommodate a user's fingers. Handles 106 and 108 may be substantially similar in size.

Male portion 101 is configured to retain a male element 116 for an animal. Male element 116 may comprise any one or more of a male piece of an animal tag, a puncture member, and an animal tissue extractor.

Female portion 103 is configured to retain a female element 118 for an animal. Female element 118 may comprise a female piece of an animal tag and/or a container for storing an extracted tissue sample.

### Female Portion

Female portion 103 comprises a female retainer assembly configured to retain female element 118. In one example embodiment, female element 118 comprises a container 1181 and a female tag portion 1182.

Female portion 103 comprises a substantially anvil-shaped mount 115 having a central portion 1151, two hook portions 1152, and an arcuate portion 1153. In one example embodiment, these portions are integral with one another; central portion 1151 adjoins the two hook portions 1152 and the arcuate portion 1153.

The central portion 1151 is substantially an extruded anvil-shaped structure. In an assembled Squeeze device 100, a large portion of the outer face of the central portion 1151 form-fittingly engages a portion of a mating member 1021 or 1022.

A hook portion 1152 extends from an end of central portion 1151 away from male portion 101 of the device with the hook oriented downwards. A hook portion 1152 creates a recess for receiving a projection of a mating member 1021 or 1022 in a friction fit. Another hook portion 1152 is provided at the other end of central portion 1151 which allows the other mating member 1021 or 1022 to be received in a friction fit. An arcuate portion 1153 extends from the bottom of central portion 1151 towards male portion 101 of the device. Arcuate portion 1153 comprises a groove configured to receive a complementary portion of a female element 118 in a friction fit.

The invention is not limited to the embodiment shown. Female portion 103 may alternatively comprise a different mount that is structurally different from mount 115.

Female portion 103 further comprises a support 120. In one example embodiment, support 120 comprises a top portion 1201 configured to receive in a recess formed therein a container 1181 of female element 118. In one example embodiment, the recess is substantially rectangular, which would be suitable for a substantially cylindrical container 1181. In other embodiments, however, the recess may assume a different geometry so as to accommodate a different container 1181. Additionally or alternatively, an adapter may be provided to allow the use of different containers 1181. The depth of recess may be such that a container 1181 is partially exposed when received by support 120. For example, this may be achieved with a recess having a depth of about half the height of container 1181. Top portion 1201 may comprise a bore 1203 therein for receiving a projection on another component or for receiving one or more inserts 126.

An insert 126 may have one or more deformable end portions that protrude out of support 120. Insert 126 may function as a detent for support 120 as will be described in more detail below.

Support 120 may further comprise a bottom portion 1202 integral with the top portion 1201. Bottom portion 1202 may be at least partially retained in a recess formed in housing 102. Support 120 is configured to move relative to housing 102 parallel to the direction of movement of male portion 101 of Squeeze device 100.

Bottom portion 1202 may comprise a bore 1204 therein for receiving a portion of an insert 124. The bore 1204 may run parallel to the direction of movement of male portion 101 of Squeeze device 100. Insert 124 may comprise a first cylindrical portion and a second cylindrical portion, wherein the first portion has a larger diameter than the second portion. The first cylindrical portion is at least partially received in a cavity in housing 102. The second cylindrical portion is substantially received in bore 1204. The diameter of bore 1204 is slightly greater than the diameter of the first cylindrical portion so that bottom portion 1202 can partially slide over the first cylindrical portion when pushed towards the first cylindrical portion. A biasing member (e.g. a coil spring) may surround the second cylindrical portion of insert 124; an end of the biasing member may be affixed to the connection between the first cylindrical portion and the second cylindrical portion. The biasing member, when deformed, biases support 120 away from the first cylindrical portion. The diameter of the biasing member is less than the diameter of bore 1204 so that the bottom portion 1202 can slide over the biasing member. The function of the biasing member is expanded on below.

Female portion 103 further comprises one or more clamps 128. In the example embodiment shown, there is provided a pair of clamps oppositely arranged along the length of support 120. Clamps 128 are configured to move between a clamping position and a release position. In the clamping position, clamps 128 are configured to retain container 1181 relative to support 120, for example by contacting an exposed portion of container 1181 and pressing container 1181 against support 120. The portion of a clamp 128 configured to contact container 1181 is the claw portion 1281, which may provide a contact surface complementary to an exposed surface of container 1181. Clamps 128 further comprise foot portion 1282 distal the claw portion 1281. In the release position, clamps 128 do not retain container 1181 relative to support 120; a user could reasonably remove container 1181 from support 120 simply by overcoming any friction between the two bodies. In use, clamps 128 may move between the clamping position and the release position via a pivoting motion about axial members 130. Each clamp 128 has a corresponding axial member 130, which passes through a bore in clamp 128 and a bore in a mating member 1021 or 1022. In this way, axial member 130 defines the axis of rotation relative to housing 102 for its corresponding clamp 128. A portion of housing 102 between clamps 128 may function as an abutment to limit the range of rotation permissible for clamps 128 in a first, clamping direction. In this context, clamping direction refers to the direction of rotation towards the clamping position.

Clamps 128 are biased towards the release position, for example using a pair of springs configured to urge clamps 128 to rotate about axial members 130 towards the release position.

Female portion 103 further comprises a base 132 configured to be detachably mounted to housing 102. This can be achieved, for example, by passing a fastener through bores 134, which include axially aligned bores in base 132 and housing 102, though the fastener must not obstruct movement of support 120 relative to housing 102. Base 132 retains clamps 128 and axial members 130 relative to housing 102 as far as translational movement. That is, axial members 130 are prevented from sliding out of their respective bores in housing 102.

Female portion 103 and neck portion 105 comprise a strengthening member 136. In an assembled Squeeze device 100, strengthening member 136 would be sandwiched between mating members 1021 and 1022. Strengthening member may be retained relative to housing 102 using a fastener and/or via a snap or friction fit. Without strengthening member 136, neck portion 105 of Squeeze device 100 would be substantially hollow, rendering it prone to structural damages. As an example, strengthening member 136 may fill a gap between an upper portion and a lower portion of neck portion 105, which allows a force perpendicular to the neck axis to be supported by the whole neck portion 105. This means Squeeze device 100 may sustain a greater force applied at and normal to neck portion 105 without snapping.

Female portion 103 and neck portion 105 further comprise an actuator 138. The function of actuator 138 is to move clamps 128 between the clamping position and the release position. In one example embodiment, actuator 138 is a substantially elongated member having a first end portion and a second end portion. The first end portion of actuator 138 is configured to engage foot portion 1282 of clamps. The second end portion is in communication with activator 104. The two mating members 1021 and 1022 define a hollow channel in which actuator 138 axially moves between a first position and a second position. In the first position, actuator 138 is distal male portion 101. In the second position, actuator 138 is proximate male portion 101. Movement of actuator 138 relative to housing 102 may be assisted by one or more bearings 140 in engagement with actuator 138. The one or more bearings 140 are fitted concentrically around actuator 138 and may advantageously bear any load housing 102 might exert on actuator 138. In addition, bearings 140 may help prevent any abrasions on actuator 138 caused by friction between actuator 138 and housing 102. Bearings 140 may be frictionally retained against housing 102. The contact surface between bearings 140 and actuator 138 preferably has low friction.

In use, a user can rotate activator 104 to retract actuator 138 towards its second position. Retraction of actuator 138 is substantially proportional to rotation of activator 104. A slot 142 is provided in activator 104 configured for engagement with a projection 144 at the second end portion of actuator 138. Projection 144 and slot 142 couple motion of activator 104 to actuator 138. When projection 144 is at a lower end of slot 142, actuator 138 is in the first position. When projection 144 is at an upper end of slot 142, actuator 138 is in the second position.

Foot portion 1282 of a clamp 128 has a substantially trapezoidal profile characterized by an incline 1283. Preferably, the first end portion of actuator 138 also comprises an incline that is substantially complementary to incline 1283. The two inclines form a contact surface between clamps 128 and actuator 138. In one example embodiment, the first end portion of actuator 138 is disposed between two foot portions 1282 of a pair of clamps 128. The two inclines of the two foot portions 1282 of the pair of clamps 128 form a funnel having a narrow end distal male portion 101 and a wide end proximate male portion 101. The first end portion of actuator 138 is wider than the narrow end but narrower than the wide end.

A biasing member may be provided which is in communication with actuator 138 and housing 102. Movement of actuator 138 towards its second position will cause the biasing member to deform. Under said deformation, the biasing member urges actuator 138 towards its first position. The biasing member may be a helical spring capable of generating sufficient restoring force to move actuator 138 into its first position in the absence of force applied from activator 104.

### Male Portion

Male portion 101 of Squeeze device 100 comprises an internal assembly 161 in communication with handle 106. In one example embodiment, Squeeze device 100 is configured such that user operation of handle 106 may cause internal assembly 161 to move a fitted male element 116 towards female portion 103. This actuation of internal assembly 161 may apply an animal tag to an animal, extract a sample of animal tissue, puncture a part of an animal, or perform any combination of these functions.

Male portion 101 may comprise a plurality of biasing members 180 configured to achieve various functions. Each of these biasing members 180 is described in more detail below.

In one example embodiment, internal assembly 161 is in communication with handle 106 via a linkage 150, a shoulder 152, a pin 154, and an arm 156. Rotational movement of handle 106 may trigger movements of all four components and, as a result, the rotational movement of handle 106 is converted to translational movement of at least a part of internal assembly 161.

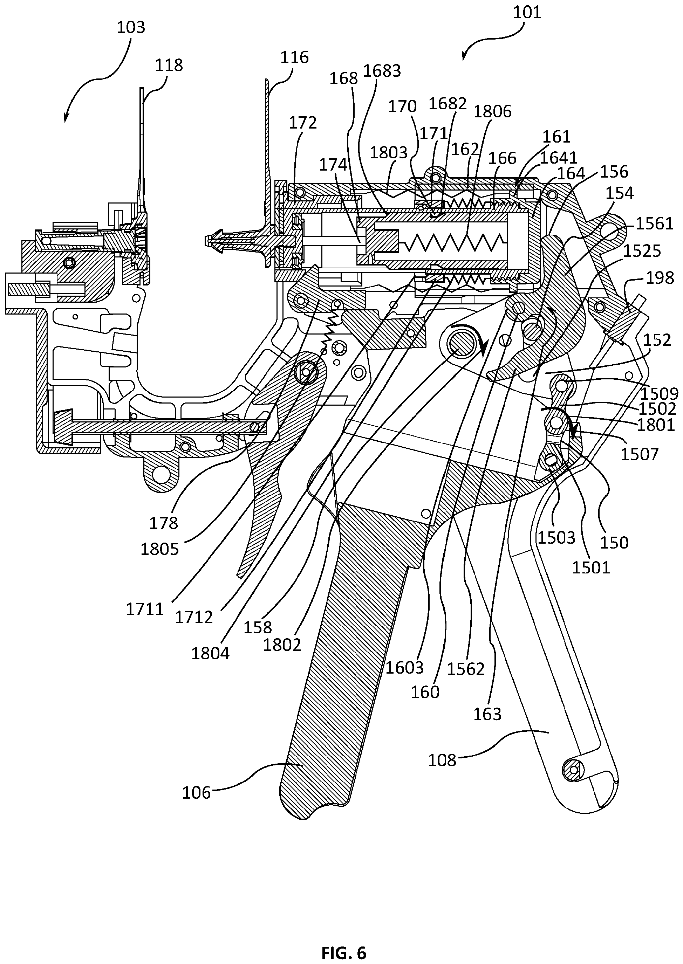

Linkage 150 may comprise two portions 1501 and 1502. In one example embodiment, portions 1501 and 1502 may each comprise two end portions adjoined by a bridging portion. An end portion 1503 of portion 1501 provides a connection between linkage 150 and handle 106. The connection may occur, as an example, by way of a fastener passing through aligned apertures in handle 106 and portion 1501 at end portion 1503. Bridging portion of portion 1501 curves outwardly (normal to the plane depicted in Figure 6) from end portion 1503 and extends to end portion 1507 distal end portion 1503. Owing to this outward curvature, the width of end portion 1507 is greater than the width of end portion 1503. In this context, width refers to the dimension that is normal to the plane depicted in Figure 6. End portion 1507 may comprise two tabs separated by a hollow. The separation may be wider than the width of end portion 1503. Portion 1501 is substantially enclosed in a cavity in handle 106.

Similar to portion 1501, portion 1502 may also comprise two end portions. An end portion of portion 1502 is configured to engage the wider portion 1507 of portion 1501 by being received in the hollow between its two tabs. A connection between portion 1501 and portion 1502 may be formed, as an example, by way of a fastener passing through aligned apertures in the tabs and the end portion of portion 1502. Another end portion of portion 1502 is configured to form a connection with an engagement portion of shoulder 152.

In this way, linkage 150 may be considered a three-point linkage. A first point (end portion 1503 of portion 1501) connects linkage 150 to handle 106. A second point adjoins portions 1501 and 1502. A third point connects linkage 150 to shoulder 152. The second point is configured to contact a protrusion 198 when handle 106 has displaced towards handle 108 by a predetermined distance.

A biasing member (e.g. a torsion spring) 1801 may be provided at the joint between portions 1501 and 1502. When one portion 1501 or 1502 is rotated relative to the other portion, biasing member 1801 is deformed and exerts a torque in the opposite direction of rotation. That is, biasing member 1801 urges the three-point structure linkage 150 to its resting position, wherein all three points are substantially aligned, or slightly over-centre with the first point being closer to female portion 103 than the second point.

Shoulder 152 may comprise two opposing portions 1521 and 1522 that are identical or substantially similar to one another. These two opposing portions are separate by a hollow. As briefly mentioned above, an engagement portion 1523 of shoulder 152 is configured to engage end portion 1509, for example by receiving end portion 1509 within the hollow between portions 1521 and 1522 at engagement portion 1523. A connection may be formed between linkage 150 and shoulder 152 by way of a fastener passing through aligned apertures in end portion 1509 and engagement portion 1523.

Opposing portions 1521 and 1522 may each comprises an arcuate cut-out 1525 for providing a limited path of movement for shoulder 152 relative to linkage 154, which will be described in more detail below. Opposing portions 1521 and 1522 may each further comprise an aperture 1526 for receiving a fastener 158. Fastener 158 passes through aligned apertures in housing 102, handle 106, and linkage 152 and fasten these components together. Fastener 158 also defines an axis about which handle 106 pivots. While not explicitly shown in the drawings, fastener 158 is configured to be secured at both ends relative to housing 102. For example, this may use threaded caps that mate with the threaded ends of fastener 158. Alternatively, an outer casing, ring clip, circlip, or other mechanism may be used. Opposing portions 1521 and 1522 may each further comprise an aperture 1527 for receiving a fastener 160 for connecting arm 156 to shoulder 152.

A biasing member (e.g. a torsion spring) 1802 may be provided at the position of fastener 158. When handle 106 and linkage 152 are rotated relative to on another, biasing member 1801 is deformed and exerts a torque in the opposite direction of rotation.

Pin 154 is fixed to housing 102, for example via a threaded connection or a friction fit. Linkage 154 protrudes outwardly from arcuate cut-out 1525 and is configured to contact an inner surface of arcuate cut-out 1522. In this way, rotational movement of arcuate cut-out 1525 about fastener 158 is stopped when pin 154 abuts either end of arcuate cut-out 1525. In some embodiments, the linkage 154 may be retained by a retention structure comprising a pair of opposing caps. Each cap is on a corresponding side of the device and are configured to hold the linkage 154 relative to the device. The cap may be plastic or another appropriate material.

Pin 154 is fixed to housing 102, for example via a threaded connection or a friction fit. Linkage 154 protrudes outwardly from arcuate cut-out 1525 and is configured to contact an inner surface of arcuate cut-out 1522. In this way, rotational movement of arcuate cut-out 1525 about fastener 158 is stopped when pin 154 abuts either end of arcuate cut-out 1525.

Arm 156 may comprise two portions 1561 and 1562 forming a substantially 90° angle. Bottom portion 1561 is substantially disposed within the hollow between opposing portions 1521 and 1522 of shoulder 152. Arm 156 may further comprise a perforated stub for receiving fastener 160. As mentioned above, fastener 160 connects arm 156 to shoulder 152. In addition, fastener 160 defines an axis about which arm 156 rotates relative to shoulder 152.

Similar to shoulder 152, arm 156 is limited in its range of motion: arm 156 is configured to abut pin 154 at a recess formed between perforated stub and bottom portion 1561. Pin 154 additionally forces rotation of arm 156 when the pivot at fastener 160 undergoes displacement.

Arm 156 is configured to drive internal assembly 161 towards female portion 103 of Squeeze device 100. This may be achieved by an end of portion 1562 of arm 156 directly contacting at least a part of internal assembly 161. In use, movement of internal assembly 161 can cause a male element 116 to engage a female element 118. Non-limitingly, this can occur as part of an operation to apply a tag to an animal and/or to extract an animal tissue sample.

Internal assembly 161 comprises at an end distal female portion 103 a cap 164, which provides an interface between internal assembly 161 and arm 156. In one example embodiment, portion 1561 of arm 156 is configured to contact an end of cap 164 distal female portion 103. Rotation of arm 156 about fastener 160 in direction 163 may push cap 164 towards female portion 103. Cap 164 may comprise at an end proximate female portion 103 an interface for connecting to a tube 166. This interface may be a threaded interface. Cap 164 and tube 166 move in unison such that there is no relative movement between tube 166 and cap 164. Cap 164 may further comprise a flange 1641 disposed between its two ends.

One or more biasing members (e.g. a coil spring) 1803 may be provided between flange 1641 and one or more opposite interior projections of housing 102. When cap 164 moves relative to housing 102 towards female portion 103, biasing member 1803 is deformed and exerts a torque in the opposite direction. That is, biasing member 1803 is configured to urge cap 164 towards its resting position, wherein cap 164 is furthest way from female portion 103 as housing 102 allows.

Internal assembly 161 further comprises a shell 162 for supporting cap 164. The configuration of shell 162 reduces the friction that would otherwise resist the movement of cap 164. In one example embodiment, shell 162 may substantially be a hollow cylindrical member. Shell 162 may be snugly positioned inside housing 102 and substantially restrained from moving relative to housing 102. Consequently, cap 164 may be substantially restricted to a single degree of movement (linearly moving towards or away from female portion 103) relative to housing 102 due to flange 1641 being in contact with shell 162. There may be a cut-out 1621 in shell 162. Such a cut-out 1621 may be provided so as to not impede movement of arm 156. In the illustrated example, cut-out 1621 is necessary since shell 162 would otherwise collide with stub of arm 156.

Internal assembly 161 further comprises a tube 166 partially enclosed by cap 164 and shell 162. Tube 166 may substantially span the length of male portion 101. As alluded to above, there is provided at an end of tube 166 distal female portion 102 an interface for engaging with cap 164. This interface may be a threaded interface. Further, there are one or more openings circumferentially provided on tube 166. Suppose tube 166 defines a longitudinal axis, openings may be at substantially the same axial position. Openings may be uniformly distributed around the circumference of tube 166. These openings are for housing balls 170, which will be described in more detail below. Tube 166 is further configured to engage a ball retainer 171, for example via a pin or fastener passing through openings in tube 166 and ball retainer 171. An end of tube 166 proximate female portion 102 may comprise a profile configured for engagement with a seal 176. This end may additionally comprise one or more apertures. In use, one of these apertures allows an end of a tissue sampler 174 to extend out of tube 166. Tube 166 further comprises a cut-out 1663. This cut-out 1663 allows a part of an arm 178 to extend into tube 166 and contact an abutment surface of an inner 168 contained inside tube 166. Tube 166 may preferably be fitted with a damper 1664 at its end proximate female portion 103. This is for dampening the impact of inner 168 as it is thrusted towards female portion 103 under the effect of a loaded biasing member 1806 (e.g. a coil spring).

Internal assembly 161 further comprises an inner 168 configured for movement within and relative to tube 166. Inner 168 may be a substantially tubular structure comprising two opposing hollow ends, one proximate female portion 103 and the other distal female portion 103. Non-limitingly, inner 168 may be configured to retain an animal tissue sampler 174 as well as load a biasing member 1806. A cavity in inner 168 is configured for housing biasing member 1806. Such a cavity can be provided by an interior collar or plate, which acts as a stop for one end of biasing member 1806 proximate female portion 103. The other end of biasing member 1806 abuts cap 164 such that relative movement between inner 168 and tube 166 (fixed to cap 164) may cause biasing member 1806 to deform, thereby loading it with elastic potential energy. Inner 168 may comprise a substantially circumferential groove 1682 on its exterior. Groove 1682 may have a substantially trapezoidal profile absent the longer base. Specially, such a profile is characterized by a substantially vertical wall defining the depth of the groove, an incline having the same height as the substantially vertical wall, and a substantially flat base adjoining the substantially vertical wall and the incline. The profile is configured to partially retain a ball 170 within groove 1682, that is, ball 170 is stopped at the substantially vertical wall and may only exit groove 1682 via the incline. Ball 170 may have a radius substantially equal to the depth of groove 1682, such that about half of ball 170 protrudes out of groove 1682. Inner 168 further comprises an abutment surface 1683 between the end proximate female portion 103 and groove 1682. Abutment surface 1683 may be a chamfered surface. At the end proximate female portion 103, inner 168 further comprises a bore for receiving a tissue sampler 174.

Internal assembly 161 further comprises one or more balls 170 configured to be retained by ball retainer 171. In one example embodiment, there are three balls 170 substantially uniformly distributed around groove 1682. A different number of balls 170 may be used in another embodiment of the invention. Ball retainer 171 may have a two-part structure. In the illustrated embodiment, a first part 1711 is coupled to tube 166 via a fastener passing through openings in the first part 1711 and tube 166, though a different connection (such as a tight friction fit) may be used in other embodiments. A second part 1712 is configured to detachably connect to first part 1721 and retains balls 170 in the corresponding openings in tube 166. Without the second part 1712, a ball 170 may fall out of its respective opening due to gravity. The second part 1712 comprises two distinct sections. In the illustrated embodiment, a first section proximate female portion 103 has a larger inner diameter than a second section distal female portion 103. The effect is that balls 170 may only exit groove 1682 if ball retainer 171 is retaining balls 170 with its first section, since the smaller inner diameter of the second section means a ball 170 will not fit between the outer surface of inner 168 and the inner surface of the second section.

While the term "balls" is used, they need not be perfectly spherical. In another embodiment of the invention, one or more balls 170 may be different rollers that fulfill the same function with respect to groove 1682.

One or more biasing members (e.g. a coil spring) 1804 may be provided between the second section of ball retainer 171 and an end of cap 164 proximate female portion 103. One or more biasing members 1804 define a "resting separation" between ball retainer 171 and cap 164 corresponding to their resting positions. This helps ensure that ball retainer 171 is correctly positioned so as to retain balls 170 relative to inner 168.

Internal assembly 161 further comprises a frame 172 concentric with tube 166. Frame 172 is fixed relative to housing 102 and is located at an end of male portion 101 proximate female portion 103. Frame 172 comprises two abutments respectively configured for stopping movement of first part 1711 and second part 1712 of retainer 171 towards female portion 103. The abutment for stopping first part 1711 is positioned closer to female portion 103. Consequently, first part 1711 is able to detach from second part 1712 and move closer to female portion 103. Similar to tube 166, frame 172 comprises a cut-out 1723 configured to allow arm 178 to extend into frame 172.

Internal assembly 161 further comprises a guillotine. The guillotine is used for holding the male element 116. In particular, in some embodiments, the male element 116 is the male piece of an animal tag comprising a tag, a needle, an extractor, and a needle support. The needle support comprises a groove in which the guillotine is located to retain the male element 116 in use. The guillotine comprises a button which moves the guillotine between an engaging position (in which the guillotine retained the male element 116) and a free position (in which the needle support is not retained by the guillotine, allowing the male tag to be removed). The button is biased towards the engaging position.

In the illustrated embodiment, cap 164, tube 166, shell 162, inner 168, retainer 171, and frame 172 are concentric with respect to a common axis. Tissue sampler 174 is substantially coincident with the common axis. Shell 162 and frame 172 are fixed relative to housing 102. Cap 164, tube 166, and first part 1711 of retainer 171 are configured to move in unison in use. Inner 168 is configured to be retained against movement relative to tube 166 via one or more balls 170, which couple inner 168 and tube 166 when positioned in groove 1682.

As alluded to previously, male portion 101 additionally comprises an arm 178, which is pivotally connected to housing 102 via a fastener. Arm 178 may comprise a substantially straight section and a beak. An end of the substantially straight section distal female portion 103 is configured to engage a portion of handle 106. Movement of handle 106 away from handle 108 may cause arm 178 to rotate in direction 1782. When the straight section is substantially parallel to inner 168, the beak extends into cut-out 1663 of tube 166, and the tip of the beak is positioned to contact abutment surface 1683 of inner 168. The tip of the beak has a profile that complements abutment surface 1683.

A biasing member (e.g. a coil spring) 1805 connects arm 178 to a lower portion of housing 102. Biasing member 1805 urges arm 178 to its resting position, wherein arm 178 is substantially parallel to inner 168.

### Pull Device

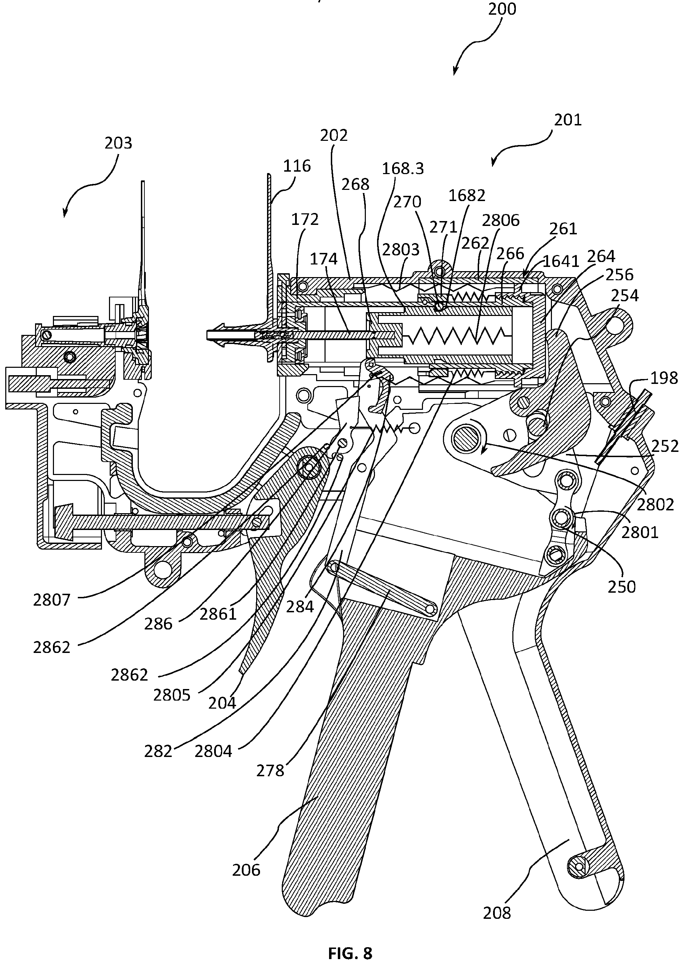

Figure 8 shows an example Pull device 200 which may be used to perform the animal-related functions described above.

The Pull device 200 may comprise a male portion 201, a female portion 203, a neck portion 205 connecting male portion 201 and female portion 203, a housing 202, an activator 204, and a first handle 206. These are the major components visible when a Pull device 200 is in its assembled form. In use, first handle 206 is first pulled away from a second handle 208 in an opening direction and subsequently squeezed towards second handle 208 in a closing direction. This contrasts the Squeeze device 100, which is configured to perform an animal-related function by a user squeezing handle 106 towards 108. However, the two devices are configured for the same function: they both can cause parts of their respective male portion to move towards their respective female portion. This may cause a tag to be applied to an animal and/or some animal tissue to be extracted and disposed in a container.

Housing 202, female portion 203, activator 204, and neck portion 205 are substantially similar to their counterparts 102, 103, 104, and 105 in Squeeze device 100 in structure and function.

### Male Portion

Male portion 201 of Pull device 200 comprises an internal assembly 261 in communication with handle 206. In one example embodiment, Pull device 200 is configured such that user operation of handle 206 may cause internal assembly 261 to move a fitted male element 216 towards female portion 203. This actuation of internal assembly 261 may apply an animal tag to an animal, extract a sample of animal tissue, puncture a part of an animal, or perform any combination of these functions.

Male portion 201 comprises a plurality of biasing members 280 configured to achieve various functions. Biasing members 2801, 2803, 2804, and 2806 are substantially similar to their counterparts 1801, 1803, 1804, and 1806. Biasing members 2805 and 2807 are described in more detail below. In some embodiments, further biasing members may be provided. This may be analogue to biasing member 1802.

Notably, biasing member 2801 may be configured to allow a resting position of handle 206 closer to handle 208 compared to Squeeze device 100. The extra clearance may be desirable as operation of Pull device 200 requires handle 206 to be pulled away from handle 208.

In one example embodiment, internal assembly 261 is in communication with handle 206 via a linkage 250, a shoulder 252, a pin 254, and an arm 256. Rotational movement of handle 206 triggers rotational movements of all four components and, as a result, the rotational movement of handle 206 is converted to translational movement of at least a part of internal assembly 261. The structure and function of components 250, 252, 254, and 256 are substantially similar to those of their counterparts 150, 152, 154, and 156.

Internal assembly 261 comprises a shell 262, a cap 264, a tube 266, an inner 268, one or more balls 270, and a ball retainer 271. These are substantially similar to their counterparts 162, 164, 166, 168, 170, and 171, other than the differences described below. For example, where inner 168 has a surface 1683, inner 268 has a groove 2683 configured to hold the pawl 284 when the member 2806 is compressed.

Internal assembly 262 further comprises a mechanism for loading biasing member 2806. Unlike in Squeeze device 100, the loading of member 2806 does not involve a force being applied by arm 156 to move components of internal assembly 161 towards female portion 103. Instead, the loading mechanism comprises a first linkage 278, a second linkage 282, a pawl 284, an obstacle 286, and biasing members 2805 and 2807, which cooperate to push inner 268 towards cap 264.

Linkage 278 may be a rod fixed at a first end to handle 206, for example using a fastener. At a second end of linkage 278 distal first end, there is provided a connection with linkage 282. The connection may be formed using a fastener passing through openings in linkages 278 and 282. Linkage 278 is configured to rotate about its first end.

Linkage 282 may be two elongate and parallel members comprising a first straight section, a second straight section, and an angular section adjoining the first and second straight sections. Linkage 282 is connected to linkage 278 at an end of the first straight section. The two parallel members define a gap such that at least a portion of obstacle 286 may move between the two parallel members. Linkage 282 is pivotally attached to housing 102 at 288 (near the centre of linkage 282), for example using a fastener.

Pawl 284 is connected to linkage 282 at an end of the second straight section distal the end of the first straight section, for example using a fastener. Pawl 284 comprises a foot 2841 and a beak 2842. Foot 2841 is configured to engage obstacle 286, and beak 2842 is configured to engage an groove 2683 of inner 268.

There is provided a biasing member 2807 (e.g. a coil spring) between second linkage 282 and pawl 284. Biasing member 2807 is configured to urge foot 2841 to a position between the two parallel members of second linkage 282. In this position, foot 2841 can contact obstacle 286 when foot 2841 moves towards female portion 203.

Obstacle 286 is configured to rotate about an axial member 2861 attached to housing 102. The range of motion permitted to obstacle 286 is limited by, as an example, two rods 2862. At one extremity, a foot of obstacle 286 abuts an upper rod of rods 2862. At the other extremity, the foot abuts a lower rod of rods 2862.

There may be provided a biasing member 2805 (e.g. a coil spring) between obstacle 286 and handle 106. Biasing member 2805 may be configured to urge obstacle 286 to a substantially upright position wherein obstacle 286 is abutting against an upper rod of rods 2862.

### Operation

### Container Placement and Removal

In using a Squeeze device 100 or a Pull device 200 on an animal, a user may need to place a container into a of the female portion of the device. This may occur, for example, as a preliminary step in tissue extraction. The user may also need to remove a container from the support of the female portion of the device. This may occur, for example, after tissue extraction. The operation is described with reference to female portion 103 of Squeeze device 100, though the operation is identical for Pull device 200.

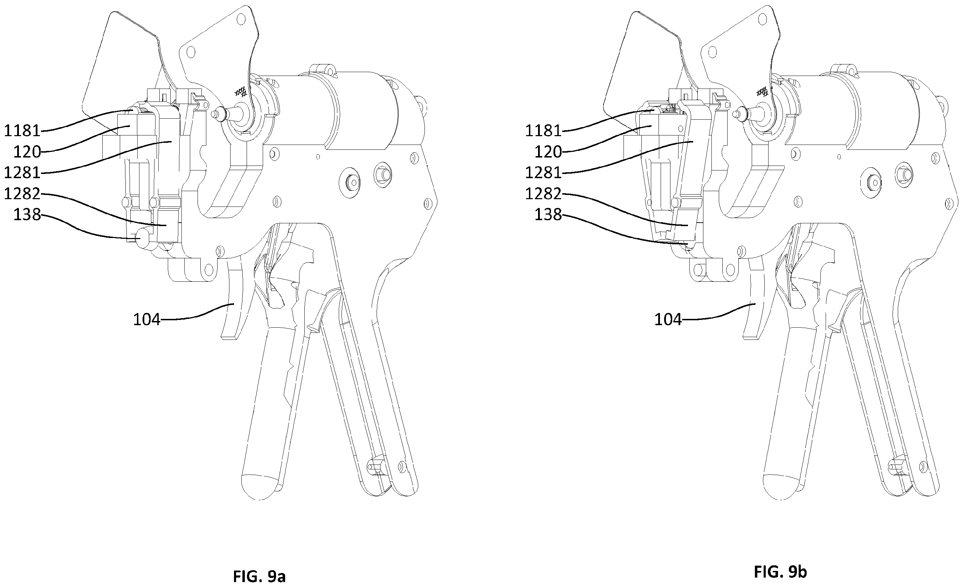

Without user operation, actuator 138 is in the first position (as shown in Figure 9a) owing to a biasing member in communication with actuator 138 and housing 102. When actuator 138 is in the first position, clamps 128 are in the clamping position. This is because having the first end portion of actuator 138 at the narrow end of the funnel formed between foot portions 1282 forces the foot portions 1282 apart. Since clamps 128 are pivotable elements, this means the claw portions 1281 distal the foot portion 1282 move towards each other. In other words, clamps 128 are in the clamping position. When clamps 128 are in the clamping position, a container 1181 cannot be placed into or removed from support 120.

To place a container 1181 into support 120, a user will need to operate actuator 138 via activator 104. For the example embodiment shown, this may involve rotating activator 104 about pivot 103 by pulling on the grip of activator 104 towards handle 106. As a result, actuator 138 will move towards the second position, meaning its first end portion will move away from the foot portions 1282. The biasing member in communication with actuator 138 and housing 102 is consequently deformed.

Clamps 128 in the release position are illustrated in Figure 9b. As explained above, clamps 128 are biased towards the release position, which is equivalent to biasing foot portions 1282 towards each other. As the first end portion of actuator 128 moves along the inclines of foot portions 1282 towards the wide end of the funnel, the biasing members for clamps 128 will cause foot portions to move towards each other. Once actuator 128 has reached the second position, foot portions 1282 will have moved sufficiently close to one another for clamps 128 to be in the release position. When clamps 128 are in the release position, a user may place a container 1181 into or remove a container 1181 from support 120.

To retain a placed container 1181 relative to support 120, a user will simply need to release activator 104. Actuator 128 will then return to the first position under the effect of the biasing member in communication with actuator 138 and housing 102. Correspondingly, foot portions 1282 will be pushed apart, causing clamps 128 to move into the clamping position. This will put the biasing members for clamps 128 in a deformed state.

Removal of a container typically occurs after actuation the device, regardless of whether the device is a Squeeze device or a Pull device. Actuation of the device can result in at least a part of a male element, which may be retained by the male portion, contacting a female element retained by the female portion. Some of the motion generated by the actuation of the device is then transmitted to the female portion.

Referring again to Squeeze device 100, support 120 (and container 1181 resting therein) is pushed away from male portion 101 and causes the biasing member surrounding insert 124 to deform. In one example embodiment, container 1181 is detached from female tag portion 1182, which will already be affixed to an animal. This detachment may be beneficial as the animal may jolt violently in pain and cause container 1181 to break free from retention to Squeeze device 100.

Previously in a compressed state due to clamps 128, the deformable end portions of insert 126 are now freed and maximally protrude laterally out of support 120.

Even when a force is no longer being transmitted to support 120 from male portion 101 (the user has released handle 106), support 120 does not return to its former position under the effect of the biasing member surrounding insert 124. This is because the deformable end portions of insert 126 abut clamps 128 and resist the restoring force produced by the biasing member.

As describe above, the user may then operate actuator 138 via activator 104 and move clamps 128 to the release position. With the deformable ends of insert 126 no longer obstructing movement, the biasing member surrounding insert 124 releases its energy and pushes support 120 and container 1181 towards male portion 101. The user may then remove the filled container 1181 and replace it with an empty container 1181, which can then be secured by releasing activator 104.

### Squeeze Device Actuation

Actuation of Squeeze device 100 is characterized by a user squeezing handle 106 towards handle 108 and consequently causing parts of internal assembly 161 (which may be retaining a male element 116) to move towards female portion 103. This movement is aided by releasing the stored energy of biasing member 1806.

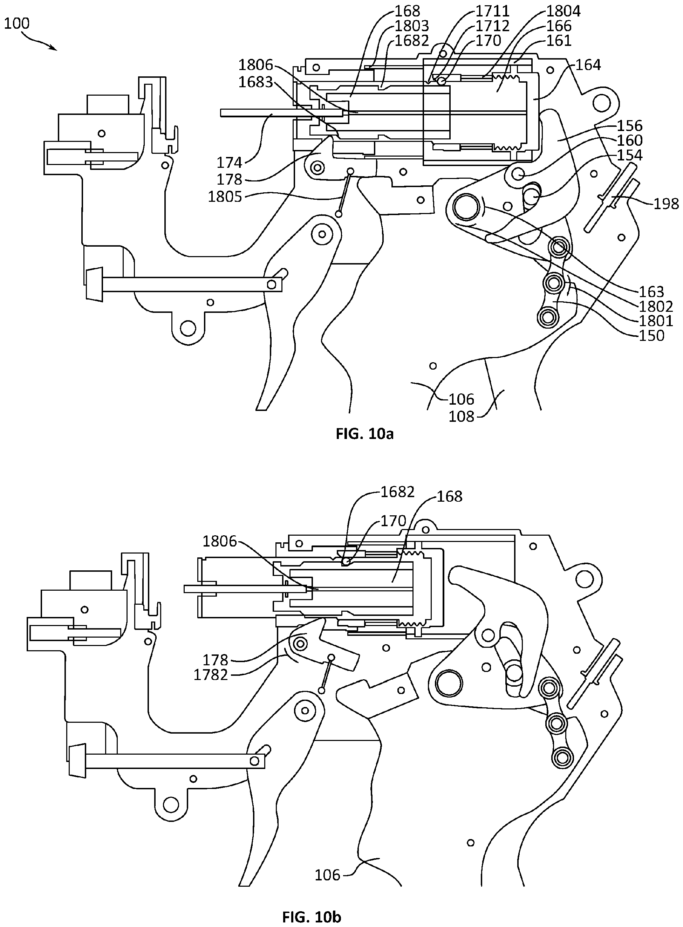

The state of device 100 shown in Figure 10a may be considered a starting point for an actuation cycle.

In user, a user squeezes handle 106, causing it to rotate and approach handle 108. With all three points of linkage 150 remaining substantially aligned, squeezing of handle 106 causes shoulder 152 to rotate in direction 163, which then causes pin 154 to be in a lower position in cut-out 1525.

Consequently, displacement of the point of connection at 160 forces arm 156 to rotate in direction 163 due to an abutment against pin 154. In this way, the force of a squeezing action on handles 106 and 108 can be transmitted to internal assembly 161 via linkage 150, shoulder 152, pin 154, and arm 156. In this position, biasing member 1802 in its deformed state is exerting a force to restore handle 106 to its resting position away from handle 108.

Cap 164 is pushed towards female portion 103 by arm 156. Tube 166, inner 168, balls 170, and retainer 171 are also moved towards female portion 103 as they are either directly or indirectly connected to cap 164. This causes biasing member 1803 to deform because cap 164 has moved relative to housing 102. Notably, inner 168 moves with tube 166 not because of balls 170, which are not in groove 1682. Inner 168 moves because biasing member 1806 is sufficiently stiff that it transmits motion from cap 164 to inner 168.

At a predetermined amount of displacement towards female portion 103, abutment surface 1683 of inner 168 will engage the beak of arm 178. The beak will then resist the motion of inner 168. While inner 168 is stopped by arm 178, tube 166 continues to move towards female portion 103 due to a force being continually applied by arm 156. This causes biasing member 1806 to deform.

Once tube 166, carrying balls 170, has moved sufficiently close to female portion 103, balls 170 will fall into groove 1682. This couples inner 168 to tube 166.

By this point, biasing member 1806 is in a loaded state. The user may release handle 106. While cap 164 may be pushed away from female portion 103 by biasing member 1803, biasing member 1806 will remain in its deformed state due to the coupling between inner 168 and tube 166 via balls 170.

The position of handle 106 at which biasing member 1806 becomes loaded may be considered the "loading position".

The state of device 100 is illustrated in Figure 10b.

Regardless of whether the user releases handle 106, more force needs to be applied in order to overcome the resistance due to arm 178. With a sufficient force pushing inner 168 towards female portion 103, arm 178 is forced to rotate in direction 1782. This is possible because abutment surface 1683 is an incline (e.g. a chamfered surfaced).

Once handle 106 has displaced to an "engaging position", parts of male assembly 161 will have moved sufficiently towards female portion 103 that a fitted male element engages a fitted female element.

After further displacement of handle 106, second part 1712 of retainer 171 is retained against further movement towards female portion 103 because it is abutting an interior projection of housing 102. First part 1711 of retainer 171, however, detaches from second part 1712 and continues to move towards female portion 103, creating a separation between the two parts. As balls 170 continue to move towards female portion 103, they also exit groove 1682 and move into section 1713 of retainer 171. Balls 170 may continue to move towards female portion 103 along with first part 1711 until first part 1711 abuts an interior projection of housing 102.

As balls 170 are no longer in groove 1682, inner 168 is free to move relative to tube 166. The loaded biasing member 1806 releases its potential energy and thrusts inner 168, which may be carrying a tissue sampler 174, towards female portion 103. The benefit of using a loadable biasing member 1806 is that some energy is pre-emptively stored which may now be released to help overcome a large resistance during an animal-related task. For example, the extra force may allow tissue sampler 174 to pierce an animal's flesh and be disposed within container 1181.

By this point, handle 106 is no longer in engagement with arm 178. Consequently, arm 178 is free to rotate in a direction opposite to direction 1782 under the effect of the restoring force applied by biasing member 1805.

The position of handle 106 at which animal tissue sample 174 is disposed within container 1181 (assisted by the release of biasing member 1806) may be considered the "disposing position".

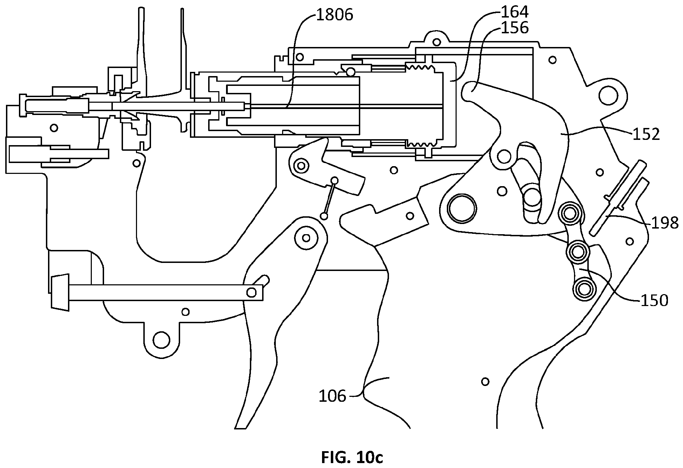

The state of the Squeeze device 100 is illustrated in Figure 10c.

At a preconfigured amount of displacement of handle 106, linkage 150 engages protrusion 198 at or near its second (middle) point, causing the three-point structure to collapse. This consequently causes shoulder 152 and arm 156 to rotate opposite to direction 163, thereby disengaging arm 156 from cap 164.

Once the task is complete, the user may release handle 106, which will then move away from handle 108 and return to its resting position owing to biasing members 1801 and 1802. In the absence of a force applied at linkage 156, cap 164 (and with it tube 166, first part 1711 of retainer 171, and inner 168) is pushed away from female portion 103 by biasing member 1803. Second part 1712 of retainer 171 is pushed away from female portion 103 by balls 170, which are in turn pushed by first part 1711 of retainer 171. Since biasing member 1806 is no longer in a deformed state, there is created a separation between inner 168 and the end of tube 166 distal female portion 103. This means biasing member 1806 will need to be reloaded in the next actuation cycle.

Once inner 168 has retracted far enough, handle 106 will re-engage arm 178 and hold arm 178 substantially parallel to inner 168. Squeeze device 100 is ready to initiate another actuation cycle.

### Pull Device Actuation

Actuation of Pull device 200 is characterized by a user first pulling handle 206 away from handle 208 and subsequently squeezing handle 206 towards handle 208. The pulling loads biasing member 2806 with potential energy. The squeezing causes parts of internal assembly 262 (which may be retaining a male element 216) to move towards female portion 203. This movement is aided by releasing the stored energy of biasing member 2806.

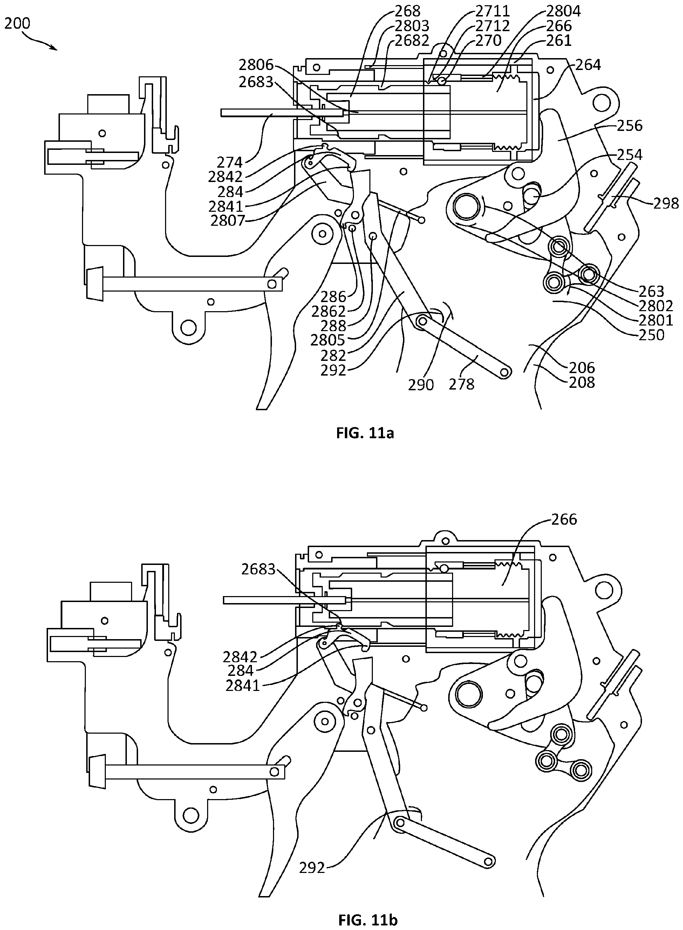

The actuation cycle may begin with Pull device 200 being in the position shown in Figure 11a. In use, a user would pull handle 206 away from handle 208. This causes linkage 282 to rotate in direction 290, resulting in a smaller angle 292 between the two linkages 278 and 282. While linkage 278 may also exhibit some rotation, it largely moves translationally towards female portion 203. This may be caused by at least the positioning of the connection between linkage 278 and handle 206 and the length of linkage 278, so that the second end of linkage 278 does not become the centre of rotation for linkage 278 as handle 206 is pulled away from handle 208.

Due to the rotation of linkage 282 about 288, the second straight section of linkage 282 and pawl 284 are moved away from female portion 203. Foot 2841 of pawl 284 slides across obstacle 286, while beak 2842 securely engages groove 2683. Biasing member 2807 may be exerting a force to urge pawl 284 closer to the second straight section of linkage 282, though no movement actually occurs due to the abutment against obstacle 268. This stage of the actuation cycle is shown in Figure 11b.

Angle 292 reduces further as the user pulls handle 206 further away from handle 208, as can be seen in Figure 12c. Being in secure engagement with inner 268, pawl 284 pushes inner 268 away from female portion 203. The relative movement between inner 268 and tube 266 causes biasing member 2806 to compress and store potential energy. Once inner 268 has moved sufficiently close to cap 264, balls 270 fall into groove 2682. In this deformed state, biasing member 2806 is exerting a force to push inner 268 towards female portion 203, but inner 268 is retained against movement relative to tube 266 due to the coupling provided by balls 270. Pawl 284 is urged towards the second straight section of linkage 282 by biasing member 2807, though no movement actually occurs due to groove 2683.

By this point, biasing member 2806 is in a loaded state. The user may start squeezing handle 206, and biasing member 2806 will remain loaded.

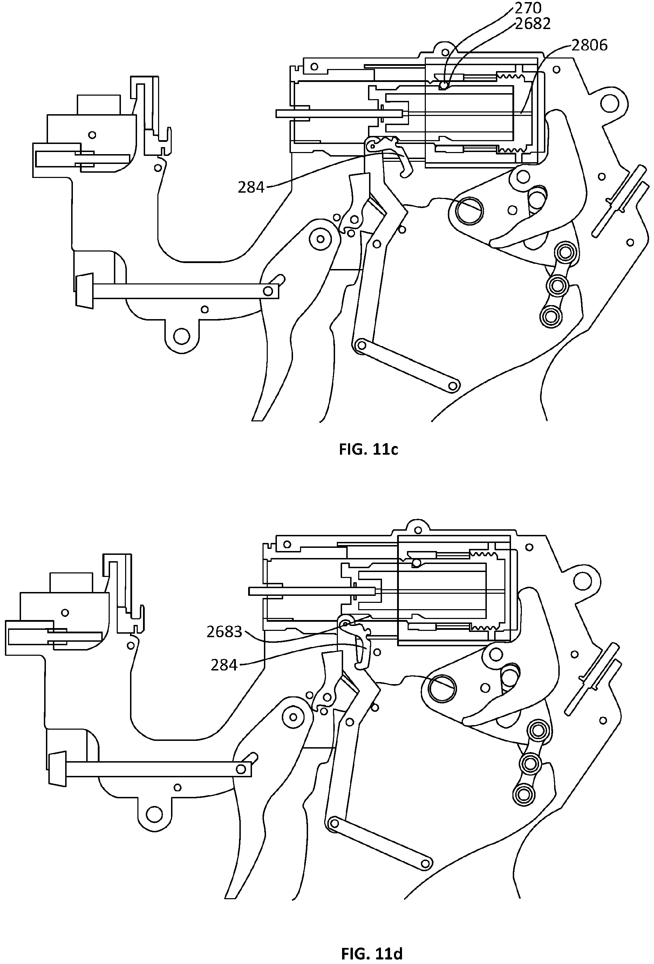

This stage of the actuation cycle is shown in Figure 11c.

The next stage of the actuation cycle requires the user to squeeze handle 206 towards handle 208. The squeezing action largely reverses the pulling action: angle 292 is increased as a result of linkage 278 moving away from female portion 103 and linkage 282 rotating opposite to direction 290. Pawl 284 disengages from groove 2683 and is pulled closer to the second straight section of linkage 282 by biasing member 2805, as can be seen in Figure 11d.

Similar to Squeeze device 100, the force of a squeezing action on handles 206 and 208 in Pull device 200 is transmitted to internal assembly 261 via linkage 250, shoulder 252, pin 254, and arm 256. Cap 264 is pushed towards female portion 203 by arm 256. Tube 266, inner 268, balls 270, and retainer 271 are also moved towards female portion 203 as they are either directly or indirectly connected to cap 264. This causes biasing member 2803 to deform because cap 264 has moved relative to housing 202. Unlike in Squeeze device 100, movement of cap 264 in Pull device 200 due to squeezing of the handles would typically occur after biasing member 2806 has been loaded, with balls 270 already in groove 2682.

Unlike arm 178 in Squeeze device 100, pawl 284 is moved clear of the path of movement of inner 268 and therefore does not abut at groove 2683 as inner 268 and tube 266 are moving towards female portion 203.

After further movement of parts of internal assembly 261 towards female portion 203, second part 2712 of retainer 271 becomes retained against further movement because it is abutting an interior projection of housing 202. First part 2711 of retainer 271, however, detaches from second part 2712 and continues to move towards female portion 203, creating a separation between the two parts. As balls 270 continue to move towards female portion 203, they also exit groove 2682 and move into section 2713 of retainer 271. Balls 270 may continue to move towards female portion 203 along with first part 2711 until first part 2711 abuts an interior projection of housing 202.

As balls 270 are no longer in groove 2682, inner 268 is free to move relative to tube 266. The loaded biasing member 2806 releases its potential energy and thrusts inner 268, which may be carrying a tissue sampler 274, towards female portion 203. The benefit of using a loadable biasing member 2806 is that some energy is pre-emptively stored which may now be released to help overcome a large resistance during an animal-related task, for example when piercing an animal's ear during tag application.

The movement of handle 206 towards handle 208 also positions pawl 284 in preparation for the next actuation cycle. As the second straight section of linkage 282 moves towards female portion 203, so does pawl 284. During this movement, foot 2841 contacts obstacle 286 and pawl 284 is forced to rotate about its point of connection with linkage 282. Obstacle 286 may have rotated about 2801 so that its foot is closer to the lower rod of rods 2862. This may have occurred due to obstacle 286's connection to handle 206 via biasing member 2805. Such a rotation of obstacle 286 creates a larger separation between itself and inner 268, allowing pawl 284 to pass with more ease. Pull device 200 may be configured such that foot 2841 does not slide past and disengage from obstacle 286. This may be achieved at least in part due to biasing member 2807 which, in its deformed state, exerts a downward normal force on obstacle 286 via pawl 284. This helps resist the sliding motion.

At a preconfigured amount of displacement of handle 206, linkage 250 engages protrusion 298 at or near its second (middle) point, causing the three-point structure to collapse. This consequently causes shoulder 252 and arm 256 to rotate opposite to direction 263, thereby disengaging arm 256 from cap 264.

Once the task is complete, the user may release handle 206 and push handle 206 away from handle 208 to allow handle 206 to return to its resting position. In the absence of a force being applied by arm 256, cap 263 (and with it tube 266, first part 2711 of retainer 271, and inner 268) is pushed away from female portion 203 by biasing member 2803. Second part 2712 of retainer is pushed away from female portion 203 by balls 270, which are in turn pushed by first part 2711 of retainer 271. Since biasing member 2806 is no longer in a deformed state, there is created a separation between inner 286 and the end of tube 266 distal female portion 203. This means biasing member 2806 will need to be reloaded in the next actuation cycle.

In some embodiments, further biasing members may be provided to reset handle 206 after use. For example, a spring may force handle 206 away from handle 208.

Pull device 200 is ready to initiate another actuation cycle.

### Interpretation

The term "comprises" and other grammatical forms is intended to have an inclusive meaning unless otherwise noted. That is, they should be taken to mean an inclusion of the listed components, and possibly of other non-specified components or elements.

While the present invention has been explained by the description of certain embodiments, the invention is not restricted to these embodiments. It is possible to modify these embodiments without departing from the scope of the invention as set out in the appended claims.

## Claims

1. A hand-held device for applying a tag to animals and extracting animal tissue, comprising:
a first handle (106);
a second handle (108);
a first jaw portion configured to engage a first portion of an animal tag and an animal tissue sampler for extracting animal tissue;
a second jaw portion configured to engage a second portion of the animal tag and a container for storing animal tissue; and
a spring,
in which displacing the first handle in a closing direction to an engaging position causes the first portion of the animal tag to engage the second portion of the animal tag;
in which displacing the first handle in the closing direction to a loading position places the spring into a deformed state and
in which, displacing the first handle in the closing direction to a disposing position causes the animal tissue sampler to be disposed within the container,
**characterised in that** the spring in the deformed state is configured, when released, to dispose the animal tissue sampler within the container.

2. The hand-held device of claim 1, further comprising a housing (102) and a first inner for retaining the animal tissue sampler, wherein displacing the first handle in the closing direction to the loading position displaces the spring into a deformed state via relative movement between the first inner and the housing.

3. The hand-held device of claim 2, further comprising an arm (178) comprising a beak configured to abut the first inner.

4. The hand-held device of claim 3, wherein the beak of the arm abuts the first inner at an inclined contact surface.

5. The hand-held device of any one of claims 2 to 4, further 3 comprising a second inner and a coupling, wherein the coupling couples the first inner and the second inner in a first configuration, and wherein the coupling allows movement of the first inner relative to the second inner in a second configuration.

6. The hand-held device of claim 5, wherein the coupling comprises one or more rollers, wherein the one or more rollers are partially retained within a groove of the first inner in the first configuration, and wherein the one or more rollers are not retained within the groove (1682) in the second configuration.

7. A hand-held device for applying a tag to animals and extracting animal tissue, comprising:
a first handle (106);
a second handle (108);
a first jaw portion configured to engage a first portion of an animal tag and an animal tissue sampler;
a second jaw portion configured to engage a second portion of the animal tag and a container for storing animal tissue; and
a spring;
wherein displacing the first handle in an opening direction to a loading position places the spring into a deformed state; and
in which displacing the first handle in a closing direction to an engaging position causes the first portion of the animal tag to engage the second portion of the animal tag,
**characterised in that** the spring in the deformed state is configured, when released, to dispose the animal tissue sampler within the container.

8. The hand-held device of claim 7, further comprising a first linkage (278), a second linkage (282), and a pawl (284), wherein the first linkage is connected to the first handle, wherein the second linkage is connected to the first linkage, wherein the pawl is connected to the second linkage, and wherein the first linkage, the second linkage, and the pawl are configured to pivot relative to one another.

9. The hand-held device of claim 8, further comprising an obstacle (286) configured to engage the pawl.

10. The hand-held device of claim 8 or claim 9, further comprising an inner, wherein displacing the first handle in the opening direction causes the pawl to engage the inner.

11. The hand-held device of claim 10, further comprising a second inner and a coupling, wherein the coupling couples the first inner and the second inner in a first configuration, and wherein the coupling allows movement of the first inner relative to the second inner in a second configuration.

12. The hand-held device of claim 11, wherein the coupling comprises one or more rollers, wherein the one or more rollers are partially retained within a groove of the first inner in the first configuration, and wherein the one or more rollers are not retained within the groove in the second configuration.

## Patentansprüche

1. Handgerät zum Anbringen einer Marke an Tieren und zum Entnehmen von tierischem Gewebe, umfassend:
einen ersten Griff (106);
einen zweiten Griff (108);
einen ersten Backenteil, der dazu ausgelegt ist, mit einem ersten Teil einer Tiermarke und einem Tiergewebeprobennehmer zum Entnehmen von tierischem Gewebe einzugreifen;
einen zweiten Backenteil, der dazu ausgelegt ist, mit einem zweiten Teil der Tiermarke und einem Behälter zum Aufbewahren von tierischem Gewebe einzugreifen; und
eine Feder,
wobei das in einer Schließrichtung erfolgende Bewegen des ersten Griffs in eine Eingriffsstellung bewirkt, dass der erste Teil der Tiermarke mit dem zweiten Teil der Tiermarke eingreift;
wobei das in der Schließrichtung erfolgende Bewegen des ersten Griffs in eine Ladestellung die Feder in einen verformten Zustand versetzt und
wobei das in der Schließrichtung erfolgende Bewegen des ersten Griffs in eine Anordnungsposition bewirkt, dass der für tierisches Gewebe bestimmte Probennehmer innerhalb des Behälters angeordnet wird,
**dadurch gekennzeichnet, dass**
die Feder im verformten Zustand, wenn sie gelöst wird, dazu ausgelegt ist, den für tierisches Gewebe bestimmten Probennehmer innerhalb des Behälters anzuordnen.

2. Handgerät nach Anspruch 1, ferner umfassend ein Gehäuse (102) und einen ersten Innenteil zum Halten des für tierisches Gewebe bestimmten Probennehmers, wobei das in der Schließrichtung erfolgende Bewegen des ersten Griffs in die Ladestellung die Feder über eine relative Bewegung zwischen dem ersten Innenteil und dem Gehäuse in einen verformten Zustand versetzt.

3. Handgerät nach Anspruch 2, ferner umfassend einen Arm (178), der eine Nase umfasst, die dazu ausgelegt ist, an dem ersten Innenteil anzuliegen.

4. Handgerät nach Anspruch 3, wobei die Nase des Arms an dem ersten Innenteil an einer geneigten Kontaktfläche anliegt.

5. Handgerät nach einem der Ansprüche 2 bis 4, ferner 3 umfassend einen zweiten Innenteil und eine Kopplungsvorrichtung, wobei die Kopplungsvorrichtung den ersten Innenteil und den zweiten Innenteil in einer ersten Auslegung koppelt und wobei die Kopplungsvorrichtung eine Bewegung des ersten Innenteils relativ zu dem zweiten Innenteil in einer zweiten Auslegung ermöglicht.

6. Handgerät nach Anspruch 5, wobei die Kopplungsvorrichtung eine oder mehrere Rollen umfasst, wobei die eine oder die mehreren Rollen in der ersten Auslegung zum Teil in einer Nut des ersten Innenteils gehalten sind und wobei die eine oder die mehreren Rollen in der zweiten Auslegung nicht in der Nut (1682) gehalten sind.

7. Handgerät zum Anbringen einer Marke an Tieren und zum Entnehmen von tierischem Gewebe, umfassend:
einen ersten Griff (106);
einen zweiten Griff (108);
einen ersten Backenteil, der dazu ausgelegt ist, mit einem ersten Teil einer Tiermarke und einem für tierisches Gewebe bestimmten Probennehmer einzugreifen;
einen zweiten Backenteil, der dazu ausgelegt ist, mit einem zweiten Teil der Tiermarke und einem Behälter zum Aufbewahren von tierischem Gewebe einzugreifen; und
eine Feder;
wobei das in einer Öffnungsrichtung erfolgende Bewegen des ersten Griffs in eine Ladestellung die Feder in einen verformten Zustand versetzt; und
wobei das in einer Schließrichtung erfolgende Bewegen des ersten Griffs in eine Eingriffsposition bewirkt, dass der erste Teil der Tiermarke mit dem zweiten Teil der Tiermarke eingreift,
**dadurch gekennzeichnet, dass**
die Feder im verformten Zustand, wenn sie gelöst wird, dazu ausgelegt ist, den für tierisches Gewebe bestimmten Probennehmer innerhalb des Behälters anzuordnen.

8. Handgerät nach Anspruch 7, ferner umfassend ein erstes Gestänge (278), ein zweites Gestänge (282) und eine Klinke (284), wobei das erste Gestänge mit dem ersten Griff verbunden ist, wobei das zweite Gestänge mit dem ersten Gestänge verbunden ist, wobei die Klinke mit dem zweiten Gestänge verbunden ist und wobei das erste Gestänge, das zweite Gestänge und die Klinke dazu ausgelegt sind, sich relativ zueinander zu verschwenken.

9. Handgerät nach Anspruch 8, ferner umfassend ein Hemmnis (286), das dazu ausgelegt ist, mit der Klinke einzugreifen.

10. Handgerät nach Anspruch 8 oder Anspruch 9, ferner umfassend einen Innenteil, wobei das in der Öffnungsrichtung erfolgende Bewegen des ersten Griffs bewirkt, dass die Klinke mit dem Innenteil eingreift.

11. Handgerät nach Anspruch 10, ferner umfassend einen zweiten Innenteil und eine Kopplungsvorrichtung, wobei die Kopplungsvorrichtung in einer ersten Auslegung den ersten Innenteil und den zweiten Innenteil koppelt und wobei die Kopplungsvorrichtung in einer zweiten Auslegung eine Bewegung des ersten Innenteils relativ zu dem zweiten Innenteil ermöglicht.

12. Handgerät nach Anspruch 11, wobei die Kopplungsvorrichtung eine oder mehrere Rollen umfasst, wobei die eine oder die mehreren Rollen in der ersten Auslegung zum Teil in einer Nut des ersten Innenteils gehalten sind und wobei die eine oder die mehreren Rollen in der zweiten Auslegung nicht in der Nut gehalten sind.

## Revendications

1. Dispositif portatif pour appliquer une étiquette sur des animaux et extraire un tissu animal, comprenant :
une première poignée (106) ;
une seconde poignée (108) ;
une première partie de mâchoire configurée pour venir en prise avec une première partie d'une étiquette d'animal et un échantillonneur de tissu animal pour extraire un tissu animal ;
une seconde partie de mâchoire configurée pour venir en prise avec une seconde partie de l'étiquette d'animal et un récipient pour le stockage de tissu animal ; et
un ressort,
dans lequel le déplacement de la première poignée dans une direction de fermeture jusqu'à une position de mise en prise amène la première partie de l'étiquette d'animal à venir en prise avec la seconde partie de l'étiquette d'animal ;
dans lequel le déplacement de la première poignée dans la direction de fermeture jusqu'à une position de chargement place le ressort dans un état déformé et
dans lequel le déplacement de la première poignée dans la direction de fermeture vers une position de mise en place amène l'échantillonneur de tissu animal à être disposé à l'intérieur du récipient,
**caractérisé en ce que** le ressort à l'état déformé est configuré, lorsqu'il est libéré, pour disposer l'échantillonneur de tissu animal à l'intérieur du récipient.

2. Dispositif portatif selon la revendication 1, comprenant en outre un boîtier (102) et un premier intérieur pour retenir l'échantillonneur de tissu animal, dans lequel le déplacement de la première poignée dans la direction de fermeture vers la position de chargement déplace le ressort dans un état déformé par un mouvement relatif entre le premier intérieur et le boîtier.

3. Dispositif portatif selon la revendication 2, comprenant en outre un bras (178) comportant un bec configuré pour s'appuyer sur le premier intérieur.

4. Dispositif portatif selon la revendication 3, dans lequel le bec du bras s'appuie contre le premier intérieur au niveau d'une surface de contact inclinée.

5. Dispositif portatif selon l'une quelconque des revendications 2 à 4, comprenant en outre 3 un second intérieur et un raccord, dans lequel le raccord couple le premier intérieur et le second intérieur dans une première configuration, et dans lequel le raccord permet le mouvement du premier intérieur par rapport au second intérieur dans une seconde configuration.

6. Dispositif portatif selon la revendication 5, dans lequel le raccord comprend un ou plusieurs rouleaux, dans lequel l'un ou plusieurs rouleaux sont partiellement retenus dans une rainure du premier intérieur dans la première configuration, et dans lequel l'un ou plusieurs rouleaux ne sont pas retenus dans la rainure (1682) dans la seconde configuration.

7. Dispositif portatif pour appliquer une étiquette sur des animaux et extraire un tissu animal, comprenant :
une première poignée (106) ;
une seconde poignée (108) ;
une première partie de mâchoire configurée pour venir en prise avec une première partie d'une étiquette d'animal et un échantillonneur de tissu animal ;
une seconde partie de mâchoire configurée pour venir en prise avec une seconde partie de l'étiquette d'animal et un récipient pour le stockage de tissu animal ; et
un ressort ;
dans lequel le déplacement de la première poignée dans une direction d'ouverture jusqu'à une position de chargement place le ressort dans un état déformé ; et
dans lequel le déplacement de la première poignée dans une direction de fermeture jusqu'à une position de mise en prise amène la première partie de l'étiquette d'animal à venir en prise avec la seconde partie de l'étiquette d'animal,
**caractérisé en ce que** le ressort à l'état déformé est configuré, lorsqu'il est libéré, pour disposer l'échantillonneur de tissu animal à l'intérieur du récipient.

8. Dispositif portatif selon la revendication 7, comprenant en outre une première liaison (278), une seconde liaison (282) et un cliquet (284), dans lequel la première liaison est reliée à la première poignée, dans lequel la seconde liaison est reliée à la première liaison, dans lequel le cliquet est relié à la seconde liaison, et dans lequel la première liaison, la seconde liaison et le cliquet sont configurés pour pivoter l'un par rapport à l'autre.

9. Dispositif portatif selon la revendication 8, comprenant en outre un obstacle (286) configuré pour venir en prise avec le cliquet.

10. Dispositif portatif selon la revendication 8 ou selon la revendication 9, comprenant en outre un intérieur, dans lequel le déplacement de la première poignée dans la direction d'ouverture amène le cliquet à venir en prise avec l'intérieur.

11. Dispositif portatif selon la revendication 10, comprenant en outre un second intérieur et un raccord, dans lequel le raccord couple le premier intérieur et le second intérieur dans une première configuration, et dans lequel le raccord permet le mouvement du premier intérieur par rapport au second intérieur dans une seconde configuration.

12. Dispositif portatif selon la revendication 11, dans lequel le raccord comprend un ou plusieurs rouleaux, dans lequel l'un ou plusieurs rouleaux sont partiellement retenus dans une rainure du premier intérieur dans la première configuration, et dans lequel l'un ou plusieurs rouleaux ne sont pas retenus dans la rainure dans la seconde configuration.
